(19) Europäisches Patentamt
European Patent Office
Office européen des brevets

(11) **EP 4 077 128 B1**

(12) **FASCICULE DE BREVET EUROPEEN**

(45) Date de publication et mention
de la délivrance du brevet:
**01.05.2024 Bulletin 2024/18**

(21) Numéro de dépôt: **20828053.7**

(22) Date de dépôt: **03.12.2020**

(51) Classification Internationale des Brevets (IPC):
**B64C 3/40** *(2006.01)* **B64C 3/56** *(2006.01)*
**B64C 39/10** *(2006.01)* **B64C 39/00** *(2023.01)*
**B64C 35/00** *(2006.01)*

(52) Classification Coopérative des Brevets (CPC):
**B64C 3/40; B64C 3/56; B64C 39/10;** B64C 35/006;
B64C 35/008; B64C 39/001; Y02T 50/10

(86) Numéro de dépôt international:
**PCT/FR2020/052277**

(87) Numéro de publication internationale:
**WO 2021/123540 (24.06.2021 Gazette 2021/25)**

(54) **AÉRONEF À PROPULSION ÉLECTRIQUE COMPORTANT UNE AILE CENTRALE ET DEUX AILES LATÉRALES MOBILES EN ROTATION**

ELEKTRISCH ANGETRIEBENES FLUGZEUG MIT ZENTRALEM FLÜGEL UND ZWEI MOBILEN DREHSEITIGEN FLÜGELN

AIRCRAFT WITH ONE CENTRAL WING AND TWO MOBILE ROTATING SIDE WINGS AND ELECTRICAL PROPULSION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2019 FR 1914887**

(43) Date de publication de la demande:
**26.10.2022 Bulletin 2022/43**

(73) Titulaire: **Eenuee**
**42000 Saint-Etienne (FR)**

(72) Inventeurs:
• **HERZBERGER, Erick**
**74000 ANNECY (FR)**

• **SENELLART, Benoît**
**73000 CHAMBERY (FR)**

(74) Mandataire: **Semaoune, Idriss**
**Cabinet Laurent et Charras**
**15, rue Camille de Rochetaillée**
**CS 70203**
**FR-42005 Saint-Etienne Cedex 1 (FR)**

(56) Documents cités:
| | |
|---|---|
| WO-A1-2017/098374 | CN-A- 110 182 353 |
| JP-A- 2018 167 792 | RU-C1- 2 668 000 |
| US-A- 1 316 280 | US-A- 3 762 355 |
| US-A- 4 080 922 | US-A- 5 984 231 |
| US-A1- 2019 276 135 | US-A1- 2019 359 330 |

EP 4 077 128 B1

## Description

## Domaine technique de l'invention

La présente invention concerne un aéronef à propulsion électrique comportant une aile centrale et deux ailes latérales mobiles en rotation. Elle s'applique en particulier au transport aérien de passagers ou de fret.

## Technique antérieure

Des architectures très diversifiées d'avion coexistaient jusqu'à 1945, notamment les grands hydravions. L'avènement des moteurs à réaction ainsi que la fiabilisation des avions ont conduit à ce qu'une seule architecture soit retenue. Un fuselage oblong de type globalement cylindrique avec deux latérales ailes et des empennages constitue la formule majoritairement retenue dans l'après guerre. La vitesse étant la caractéristique principalement recherchée, tout a été conçu pour que l'avion se déplace le plus rapidement possible, notamment pour franchir l'atlantique. A partir de cette tendance, l'architecture va se standardiser avec comme objectif une vitesse de 800 à 1000 km/h (inférieure au mur du son). Les pistes en dur de 2 à 4 kilomètres de longueurs sont la norme dans les aéroports, qui doivent donc s'adapter, et les avions sont pressurisés afin de voler à plus de 10000 mètres d'altitude.

Les constructeurs d'avions à aile fixes (en opposition aux hélicoptères) se trouvent globalement confrontés à quatre besoins techniques fondamentaux, à savoir voler vite, décoller et se poser sur des distances de plus en plus courtes, abriter des passagers, se déplacer sur des distances de plus en plus importantes. A cela s'ajoutent les contraintes d'ordres économiques et écologiques.

L'utilisation de moteurs surpuissants apporte une réponse au besoin de voler vite, mais ils réduiront la distance parcourue. La trainée, essentiellement due aux frottements dans l'air, constitue un obstacle/frein à combattre. Il est donc nécessaire de réduire me plus possible la surface extérieure de l'avion (surface mouillée), notamment celle de l'aile et celle du fuselage.

En ce qui concerne le besoin de pouvoir décoller et/ou se poser sur de courtes distances, la masse de l'avion, la surface de l'aile et quelques appendices (type volets ou becs hyper-sustenteurs) sont les paramètres essentiels.

Le besoin d'abriter des abriter le nombre voulu de passagers (voire de fret) est évidemment lié à la taille de l'aéronef et l'aménagement de sa cabine. Dans ce domaine, de nombreux efforts ont été effectués pour optimiser le ratio nombre de passagers/dimension de la cabine mais les limites sont sans doute proches d'être atteintes pour un confort de vol optimum.

Enfin, concernant la possibilité d'effectuer des vols longues distances importantes, les distances maximum parcourues sont obtenues en faisant voler l'avion à sa finesse maximum (rapport portance sur trainée aérodynamique) et à la masse totale la plus faible possible. En théorie, la finesse maximum est obtenue lorsque la trainée de frottements est égale à la trainée induite (trainée induite par la portance). Et sa valeur augmente en réduisant les deux types de trainées.

Les architectures d'aéronefs les plus souvent retenues sont les suivantes :

- l'architecture à fuselage de type cylindre/cigare avec deux ailes latérales. Cette architecture répond globalement et depuis des décennies au besoin de vols sur grandes distances à vitesse subsonique. Mais elle engendre des inconvénients majeurs. Ses ailes sont de faibles surfaces de portance, nécessitant des aéroports de grandes dimensions et entrainant de nombreuses complexités de logistique et d'embarquement. Les ailes ont également une envergure limitée afin de stationner facilement aux terminaux et se déplacer au sol avec le moins de difficultés possibles. Certains modèles d'avions de grande capacité ont par exemple nécessité de lourds aménagements/réaménagement d'aéroports dans divers pays. La faible dimension du fuselage, voulue pour réduire la trainée, et sa section sensiblement circulaire, supportant la pressurisation, rendent la vie à bord parfois très inconfortable (sentiment d'étouffement, risque de claustrophobie, déplacements compliqués pour le personnel et les passagers, aménagements complexes de la cabine). La concentration des masses emportées dans le fuselage en rapport avec les faibles dimensions conduisent à une masse à vide très élevée. Le ratio masse à vide sur masse au décollage est compris souvent entre 0,5 et 0,6, ce qui signifie que près de 50% de la puissance de propulsion (liée à la consommation de combustible emporté) ne sert pas au transport des passagers ;

- l'architecture dite de l'aile volante, en général de (très) grande envergure, comportant une flèche pour résoudre les problèmes de stabilité longitudinale. La trainée générée est la plus faible et cette solution offre une meilleure finesse. Les passagers sont logés dans l'épaisseur du profil de l'aile, mais l'envergure de l'aile doit être agrandie considérablement. Cependant, les opérations au sol s'en trouvent peu aisés. Les volumes habitables non cylindriques rendent par ailleurs la réalisation de la structure plus complexe. Enfin, du fait d'une bonne répartition des masses, le ratio masse à vide sur masse au décollage est d'environ 0,4 ;

- l'architecture mixte, appelées « Blended Wing Body » (BWB) a été étudiée notamment pour le vol transsonique, avec une aile centrale (Body) et des ailes latérales fixes (Wings). Une architecture d'aéronef de type BWB a été proposée dans le Brevet US 6 264 136 B1 comportant des ailes latérales dont l'incidence est variable par rapport à l'aile centrale (Body). US 5984231, US2019/359330 divulguent aussi l'état de l'art antérieur.

Par ailleurs, les hydravions ont connu peu d'améliorations après la seconde guerre mondiale. La trainée aérodynamique engendrée par les dispositifs nécessaires au fonctionnement sur l'eau, tels que les fuselages à carène et redan, ainsi que les flotteurs, ont limité le développement de ce type d'appareils pour l'aviation commerciale. Récemment, des solutions de décollage et atterrissage sur l'eau grâce à des hydrofoils ont été proposées dans les Brevets FR 2 902 079 et FR 2 970 699.

Cependant, tous ces aéronefs ne sont pas encore optimisés tant en ce qui concerne leur aérodynamisme, leur stabilité, leur compacité, leur vitesse de vol, leur rayon de fonctionnement, leur possibilité de décoller/atterrir sur de courtes distances ou leur charge utile.

Présentation de l'invention

La présente invention vise à remédier à ces inconvénients avec une approche totalement novatrice en notamment terme d'architecture et de proportions.

A cet effet, selon un premier aspect, la présente invention se rapporte à un aéronef comportant un fuselage principal composé d'une aile centrale abritant des passagers et/ou du fret, deux ailes latérales pivotant sur l'aile centrale autour d'axes respectifs de rotation, les différentes ailes respectant les caractéristiques géométries suivantes :

- $L_{arg}$ étant la distance entre les deux axes de rotation des ailes latérales pivotantes,
- $L_{ong}$ étant la longueur de l'aile centrale,
- $H_{aut}$ étant la hauteur de l'aile centrale,
- $E_{nv}$ étant l'envergure de l'aéronef,
  caractérisé en ce que :

$$0,3 \times L_{ong} < L_{arg} < L_{ong},$$

$$0,11 \times L_{ong} < H_{aut} < 0,25 \times L_{ong},$$

$$E_{nv} > 1,4 \times L_{ong},$$

et
- les axes de rotation des ailes latérales sont inclinés d'un angle $\beta$ par rapport à l'axe vertical Z de l'aéronef, tel que $10° < \beta < 50°$, de sorte que les ailes latérales pivotent d'arrière vers l'avant et inversement pour se rapprocher de l'aile principale ou se déployer de part et de celle-ci.

L'invention est mise en oeuvre selon les modes de réalisation et les variantes exposées ci-après, lesquelles sont à considérer individuellement ou selon toute combinaison techniquement opérante.

Avantageusement, les ailes latérales comportent chacune au moins une gouverne de contrôle aérodynamique.

Selon un mode particulier de réalisation de la présente invention, les ailes latérales pivotent autour de leurs axes respectifs de rotation entre une première position extrême déployée de vol et une seconde position extrême rabattue de stockage de l'aéronef, l'amplitude de l'angle $\Omega$ entre ces deux positions extrêmes étant d'environ 70°.

De manière complémentaire, les ailes latérales pivotent autour de leurs axes respectifs de rotation entre une première position extrême déployée de vol et une seconde position intermédiaire déployée de décollage et/ou atterrissage, l'amplitude de l'angle $\Omega$ entre ces deux positions étant d'environ 40°.

Selon un mode de réalisation préférée de la présente invention, l'aéronef comporte au moins un pylône au-dessus de l'aile centrale supportant au moins un propulseur électrique et/ou thermique et intégrant au moins une gouverne de contrôle aérodynamique.

Selon un aspect particulièrement intéressant de la présente invention, l'aéronef comporte au moins deux hydrofoils en dessous de l'aile centrale et rétractables dans ladite aile centrale.

De préférence, l'aéronef est équipé d'au moins une porte à l'arrière et/ou à l'avant de l'aile centrale.

De manière avantageuse, l'aéronef est muni d'au moins un poste de pilotage sur le haut de l'aile centrale et situé à la hauteur des ailes latérales.

Selon une caractéristique complémentaire de la présente invention, l'aéronef comporte un parachute de secours à l'intérieur de l'aile centrale.

Brève description des figures

D'autres avantages, buts et caractéristiques de la présente invention ressortent de la description qui suit faite, dans un but explicatif et nullement limitatif, en regard des dessins annexés, dans lesquels :

[Fig. 1] la figure 1 est une vue en perspective avant-haut de ¾ d'un aéronef conforme à la présente invention, avec des ailes latérales en position de vol en palier et la représentation d'un système de coordonnées X, Y, Z,
[Fig. 2] la figure 2 est une vue similaire à la figure 1 dans laquelle les ailes sont partiellement repliées vers l'avant, en position de vol en phase d'atterrissage et ou de décollage de l'aéronef,
[Fig. 3] la figure 3 est une vue similaire à la figure 1 dans laquelle les ailes sont totalement repliées vers l'avant, en position de rangement,
[Fig. 4] la figure 4 est une vue de dessus de l'aéronef de la figure 1,
[Fig. 5] la figure 5 est une vue de côté de l'aéronef de la figure 4, avec des ailerons de type foils sortis,

[Fig. 6] la figure 6 est une vue avant de l'aéronef de la figure 5, et

[Fig. 7] la figure 7 est une vue de détail d'une variante de réalisation d'un pylône de l'aéronef des figures 1 à 6.

Description des modes de réalisation

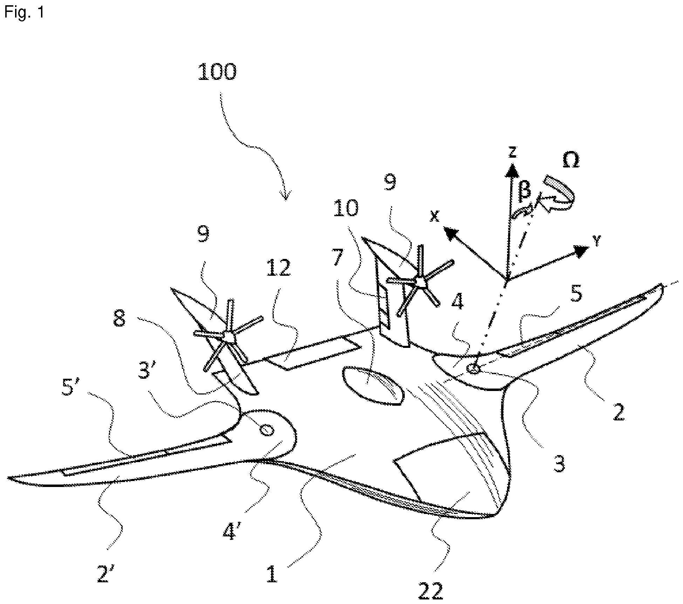

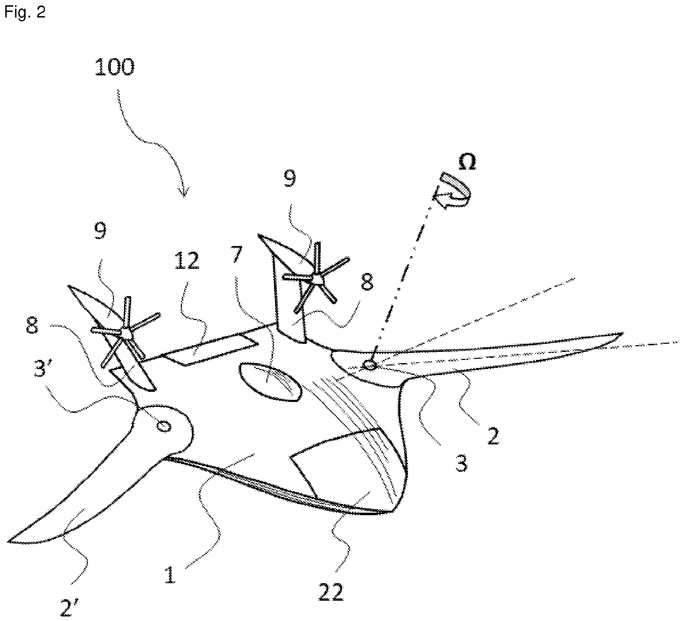

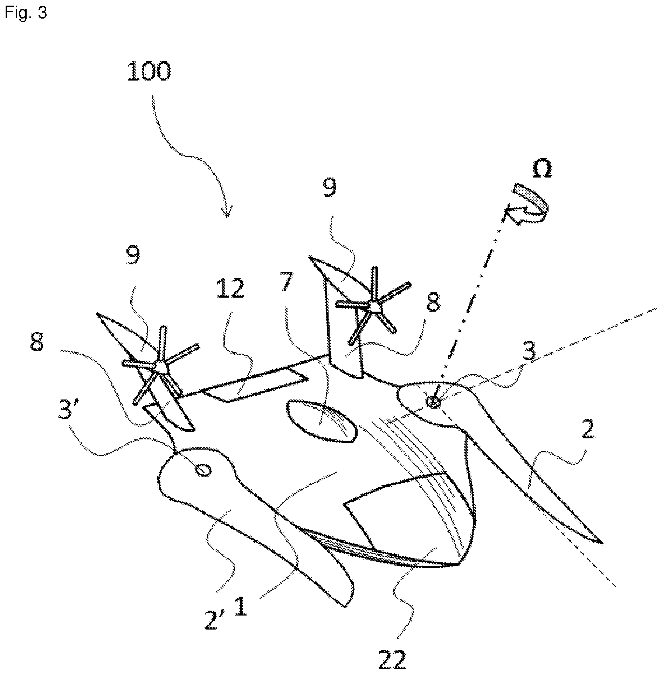

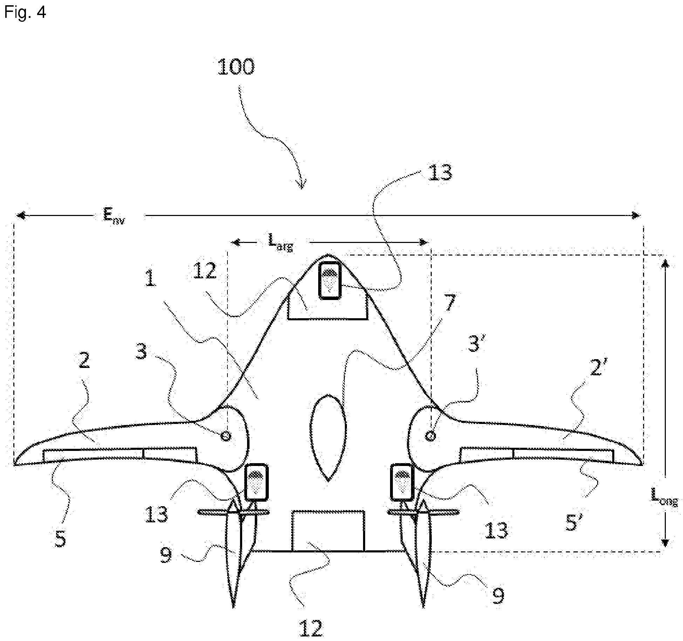

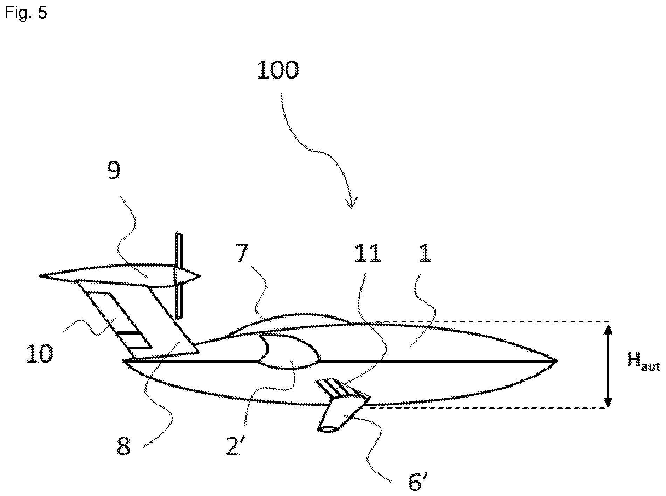

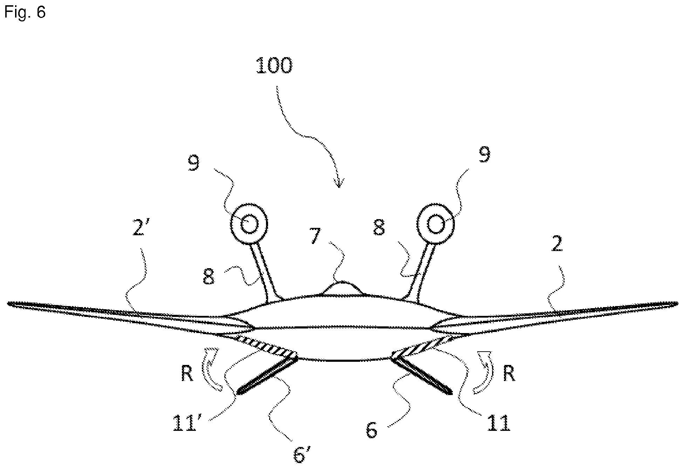

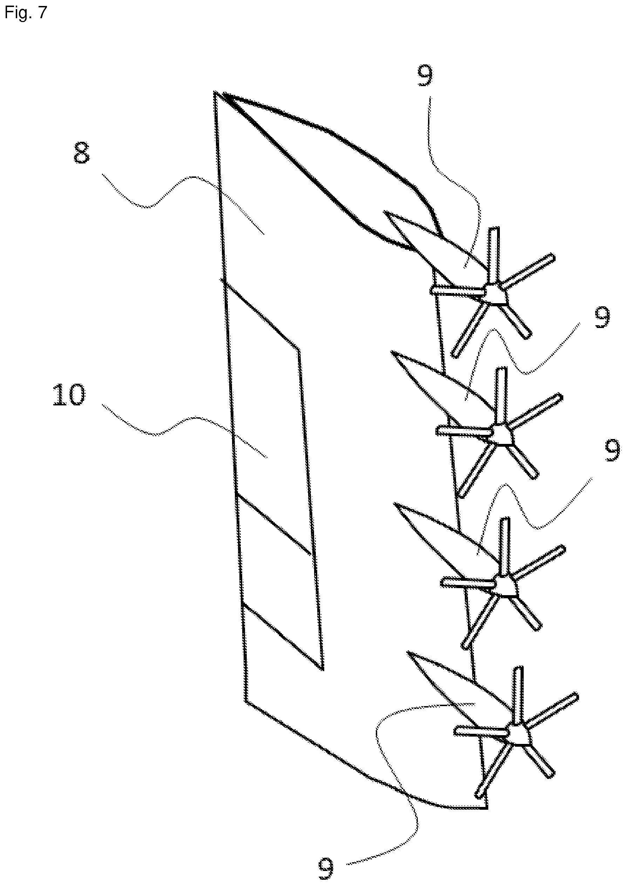

Les figures 1 à 7 représentent un aéronef 100 conforme à la présente invention, de préférence à propulsion électrique ou hybride.

Cet aéronef 100 comporte une aile centrale 1, formant un fuselage pour le transport de passagers et/ou de fret, et deux ailes latérales 2 et 2'. Ces ailes peuvent pivoter autour d'axes respectifs de rotation 3 et 3' pour prendre différentes positions qui seront décrites ultérieurement.

La forme générale de l'aéronef 100, et en particulier des ailes 1, 2 et 2', est de type connu, et respecte, les considérations géométries suivantes :

-	$L_{arg}$ est la distance entre les deux axes de rotation 3 et 3' des ailes latérales pivotantes 2 et 2',
-	$L_{ong}$ est la longueur de l'aile centrale 1,
-	$H_{aut}$ est la hauteur de l'aile centrale 1,
-	$E_{nv}$ est l'envergure de l'aéronef 100.

Selon la présente invention, ces caractéristiques géométriques doivent respecter les conditions suivantes :

$$0,3 \times L_{ong} < L_{arg} < L_{ong},$$

$$0,11 \times L_{ong} < H_{aut} < 0,25 \times L_{ong},$$

$$E_{nv} > 1,4 \times L_{ong}.$$

Les deux axes 3 et 3' situés dans des zones de transition 4 et 4' entre l'aile centrale 1 et les ailes latérales 2 et 2', permettent de faire pivoter chacune des ailes latérales 2 et 2'. Les axes 3 et 3' sont situés dans ces zones 4 et 4' à forte épaisseur de manière à supporter les efforts de portance engendrés par les ailes latérales 2 et 2' sur le fuselage.

Comme cela est visible sur la figure 1, les axes 3 et 3' sont inclinés d'un angle β par rapport à la verticale Z. La rotation des ailes latérales 2 et 2' d'un angle Ω autour des axes 3 et 3' engendre les considérations suivantes :

-	pour des angles de rotation - 40°< Ω < + 40° : une variation en vol de l'angle relatif d'incidence aérodynamique entre les ailes latérales 2 et 2' et l'aile centrale 1 accompagnée d'une évolution du centre de poussée aérodynamique le long de l'axe longitudinal X de l'aéronef ;

-	pour des angles de rotation Ω > 70° ou Ω < - 70° : un rangement des ailes latérales 2 et 2' vers l'avant ou vers l'arrière, en particulier au sol ou sur l'eau.

Les variations, d'incidences et de position du centre de poussée, relativement entre l'aile centrale 1 et les ailes latérales 2 et 2' permettent de choisir la répartition de la portance totale entre les ailes latérales 2 et 2' et l'aile centrale 1, ces configurations étant choisies selon les différentes phases du vol.

A des angles relatifs d'incidence aérodynamique forts de l'aéronef (> 10°), notamment pour le décollage et l'atterrissage, une configuration est adoptée avec les ailes latérales 2 et 2' pivotées de manière à réduire leur angle d'incidence aérodynamique pour éviter le décrochage des ailes latérales 2 et 2' et maintenir l'efficacité du contrôle en roulis par les ailerons 5 et 5'. Dans cette configuration, l'aile centrale 1, de faible allongement, proche de la forme d'une aile delta, prend en charge une part plus importante de la portance grâce aux vortex généré autour d'elle, tout en produisant une trainée induite plus forte. La finesse aérodynamique ainsi dégradée est adaptée aux phases d'atterrissages.

En vol de croisière, les ailes latérales 2 et 2' sont pleinement déployées (Ω = 0°), les trois ailes se répartissent la portance de manière à maximiser la finesse aérodynamique, la répartition de portance s'approche d'une forme elliptique.

Les ailes latérales 2 et 2' sont chacune équipées d'une ou plusieurs gouvernes arrière 5 et 5' assurant le contrôle aérodynamique de l'aéronef 100.

L'aéronef 100 peut également décoller et atterrir sur l'eau, grâce à au moins deux hydrofoils 6 et 6' situés au dessous de l'aile centrale 1. Les hydrofoils 6 et 6' sont rétractables dans des logements 11 respectifs prévus à cet effet dans l'aile centrale 1 (cf. flèches R). Cela permet de réduire la trainée en vol et autorise les manoeuvres basses vitesses sur eau peu profonde.

L'aile centrale 1 comporte un poste de pilotage 7 situé proche des ailes latérales 2 et 2' sur l'axe longitudinal X. Cela permet de contrôler l'ensemble des éléments vitaux de l'aéronef 100 ainsi que l'espacement au sol ou sur l'eau, les manoeuvres dans les ports et aéroports sont plus aisées.

L'aéronef 100 est également muni d'un ou plusieurs pylônes 8. Chaque pylône 8 supporte des groupes motopropulseurs électriques 9, thermiques ou hybrides. Ces pylônes 8 intègrent des gouvernes arrière 10 pour le contrôle de l'aéronef 100 en lacet et/ou en tangage et/ou en roulis.

L'arrière de l'aile centrale 1 est équipé d'une ou plusieurs porte(s) d'accès 12 pouvant s'ouvrir vers le haut et ou vers le bas. Ces portes 12 peuvent être manoeuvrées au sol, en vol, sur l'eau.

L'aile centrale 1 est enfin équipée d'un ou plusieurs parachutes 13 de secours répartis dans les volumes de faible hauteur.

Il doit être bien entendu que la description détaillée de l'objet de l'invention, donnée uniquement à titre d'illustration, ne constitue en aucune manière une limitation, et que le champ d'application de l'invention est défini pour les revendications.

**Revendications**

1. Aéronef (100) comportant un fuselage principal composé d'une aile centrale (1) abritant des passagers et/ou du fret, deux ailes latérales (2, 2') pivotant sur l'aile centrale (1) autour d'axes respectifs de rotation (3 ; 3'), les différentes ailes (1 ; 2, 2') respectant les caractéristiques géométries suivantes :

    - $L_{arg}$ étant la distance entre les deux axes (3, 3') de rotation des ailes latérales pivotantes (2, 2'),
    - $L_{ong}$ étant la longueur de l'aile centrale (1),
    - $H_{aut}$ étant la hauteur de l'aile centrale (1),
    - $E_{nv}$ étant l'envergure de l'aéronef (100), dans lequel:

$$0,3 \times L_{ong} < L_{arg} < L_{ong},$$

$$0,11 \times L_{ong} < H_{aut} < 0,25 \times L_{ong},$$

$$E_{nv} > 1,4 \times L_{ong},$$

et
    - les axes de rotation (3, 3') des ailes latérales (2, 2') sont inclinés d'un angle $\beta$ par rapport à l'axe vertical Z de l'aéronef (100), tel que 10° < $\beta$ < 50°, de sorte que les ailes latérales (2, 2') pivotent d'arrière vers l'avant et inversement pour se rapprocher ou se déployer de part et d'autre du fuselage.

2. Aéronef (100) selon la revendication 1, dans lequel les ailes latérales (2, 2') comportent chacune au moins une gouverne (5, 5') de contrôle aérodynamique.

3. Aéronef (100) selon l'une quelconque des revendications précédentes, dans lequel les ailes latérales (2, 2') pivotent autour de leurs axes respectifs de rotation (3, 3') entre une première position extrême déployée de vol et une seconde position extrême rabattue de stockage de l'aéronef, l'amplitude de l'angle $\Omega$ entre ces deux positions extrêmes étant d'environ 70°.

4. Aéronef (100) selon l'une quelconque des revendications précédentes, dans lequel les ailes latérales (2, 2') pivotent autour de leurs axes respectifs de rotation (3, 3') entre une première position extrême déployée de vol et une seconde position intermédiaire déployée de décollage et/ou atterrissage, l'amplitude de l'angle $\Omega$ entre ces deux positions étant d'environ 40°.

5. Aéronef (100) selon l'une quelconque des revendications précédentes, qui comporte au moins un pylône (8) au-dessus de l'aile centrale (1) supportant au moins un propulseur (9) électrique et/ou thermique et intégrant au moins une gouverne (10) de contrôle aérodynamique.

6. Aéronef (100) selon l'une quelconque des revendications précédentes, qui comporte au moins deux hydrofoils (6, 6') en dessous de l'aile centrale (1) et rétractables dans ladite aile centrale (1).

7. Aéronef (100) selon l'une quelconque des revendications précédentes, qui comporte au moins une porte (12) à l'arrière et/ou à l'avant de l'aile centrale (1).

8. Aéronef (100) selon l'une quelconque des revendications précédentes, qui comporte au moins un poste de pilotage (7) sur le haut de l'aile centrale (1) et situé à la hauteur des ailes latérales (2, 2').

9. Aéronef (100) selon l'une quelconque des revendications précédentes, qui comporte un parachute de secours (13) à l'intérieur de l'aile centrale (1).

**Patentansprüche**

1. Ein Flugzeug (100), das einen Hauptkörper umfasst, der aus einer zentralen Tragfläche (1) besteht, die Passagiere und/oder Fracht aufnimmt, zwei seitliche Tragflächen (2, 2'), die sich um die zentrale Tragfläche (1) um jeweilige Drehachsen (3; 3') drehen, wobei die verschiedenen Tragflächen (1; 2, 2') den folgenden geometrischen Eigenschaften gehorchen:

    • $L_{arg}$ ist der Abstand zwischen den beiden Drehachsen (3, 3') der schwenkbaren seitlichen Tragflächen (2, 2'),
    • $L_{ong}$ ist die Länge der zentralen Tragfläche (1),
    • $H_{aut}$ ist die Höhe der zentralen Tragfläche (1),
    • $E_{nv}$ ist die Spannweite des Flugzeugs (100), wobei:
    •

$$0,3 \times L_{ong} < L_{arg} < L_{ong},$$

    •

$$0{,}11 \text{ x } L_{ong} < H_{aut} < 0{,}25 \text{ x } L_{ong},$$

•

$$E_{nv} > 1{,}4 \text{ x } L_{ong},$$

und

• die Drehachsen (3, 3') der seitlichen Tragflächen (2, 2') sind um einen Winkel β relativ zur vertikalen Achse Z des Flugzeugs (100) geneigt, so dass 10°< β < 50°, sodass sich die seitlichen Tragflächen (2, 2') von hinten nach vorne und umgekehrt drehen, um sich dem Rumpf anzunähern oder sich zu beiden Seiten davon zu entfalten.

2. Das Flugzeug (100) nach Anspruch 1, wobei die seitlichen Tragflächen (2, 2') jeweils mindestens eine aerodynamische Steuerfläche (5, 5') umfassen.

3. Das Flugzeug (100) gemäß einem der vorhergehenden Ansprüche, wobei die seitlichen Tragflächen (2, 2') um ihre jeweiligen Drehachsen (3, 3') zwischen einer ersten extremen ausgefahrenen Flugposition und einer zweiten extremen gefalteten Lagerposition des Flugzeugs schwenken, wobei die Amplitude des Winkels Ω zwischen diesen beiden extremen Positionen ungefähr 70° beträgt.

4. Das Flugzeug (100) gemäß einem der vorhergehenden Ansprüche, wobei die seitlichen Tragflächen (2, 2') um ihre jeweiligen Drehachsen (3, 3') zwischen einer ersten extremen ausgefahrenen Flugposition und einer zweiten ausgefahrenen Zwischenposition für Start und/oder Landung schwenken, wobei die Amplitude des Winkels Ω zwischen diesen beiden Positionen ungefähr 40° beträgt.

5. Das Flugzeug (100) gemäß einem der vorhergehenden Ansprüche, das mindestens einen Pylon (8) über der zentralen Tragfläche (1) umfasst, der mindestens einen elektrischen und/oder thermischen Antrieb (9) trägt und mindestens eine aerodynamische Steuerfläche (10) integriert.

6. Das Flugzeug (100) gemäß einem der vorhergehenden Ansprüche, das mindestens zwei Hydrofoils (6, 6') unterhalb der zentralen Tragfläche (1) umfasst, die in die besagte zentrale Tragfläche (1) einfahrbar sind.

7. Das Flugzeug (100) gemäß einem der vorhergehenden Ansprüche, das mindestens eine Tür (12) am Heck und/oder an der Front der zentralen Tragfläche (1) umfasst.

8. Das Flugzeug (100) gemäß einem der vorhergehenden Ansprüche, das mindestens ein Cockpit (7) auf der Oberseite der zentralen Tragfläche (1) umfasst, das auf der Höhe der seitlichen Tragflächen (2, 2') gelegen ist.

9. Das Flugzeug (100) gemäß einem der vorhergehenden Ansprüche, das einen Notfallschirm (13) innerhalb der zentralen Tragfläche (1) umfasst.

**Claims**

1. An aircraft (100) including a main fuselage composed of a central wing (1) accommodating passengers and/or freight, two lateral wings (2, 2') pivoting on the central wing (1) about respective axes of rotation (3; 3'), the various wings (1; 2, 2') obeying the following geometric characteristics:

   - $L_{arg}$ being the distance between the two axes of rotation (3, 3') of the pivoting lateral wings (2, 2'),
   - $L_{ong}$ being the length of the central wing (1),
   - $H_{aut}$ being the height of the central wing (1),
   - $E_{nv}$ being the wingspan of the aircraft (100),
   wherein:

   $$0.3 \text{ x } L_{ong} < L_{arg} < L_{ong},$$

   $$0.11 \text{ x } L_{ong} < H_{aut} < 0.25 \text{ x } L_{ong},$$

   $$E_{nv} > 1.4 \text{ x } L_{ong},$$

   and
   - the axes of rotation (3, 3') of the lateral wings (2, 2') are inclined by an angle β relative to the vertical axis Z of the aircraft (100), such as 10°< β < 50°, such that the lateral wings (2, 2') pivot from rear to front and vice versa so as to come closer to, or be deployed on either side from, the fuselage.

2. The aircraft (100) according to claim 1, wherein the lateral wings (2, 2') each include at least one aerodynamic control surface (5, 5').

3. The aircraft (100) according to any one of the preceding claims, wherein the lateral wings (2, 2') pivot about their respective axes of rotation (3, 3') between a first extreme deployed flight position and a second extreme folded storage position of the aircraft, the amplitude of the angle Ω between these two extreme positions being approximately 70°.

**4.** The aircraft (100) according to any one of the preceding claims, wherein the lateral wings (2, 2') pivot about their respective axes of rotation (3, 3') between a first extreme deployed flight position and a second deployed intermediate take-off and/or landing position, the amplitude of the angle $\Omega$ between these two positions being approximately 40°.

**5.** The aircraft (100) according to any one of the preceding claims, which includes at least one pylon (8) above the central wing (1) supporting at least one electric and/or thermal propulsion (9) and integrating at least one aerodynamic control surface (10).

**6.** The aircraft (100) according to any one of the preceding claims, which includes at least two hydrofoils (6, 6') below the central wing (1) and which are retractable in the said central wing (1).

**7.** The aircraft (100) according to any one of the preceding claims, which includes at least one door (12) at the rear and/or at the front of the central wing (1).

**8.** The aircraft (100) according to any one of the preceding claims, which includes at least one cockpit (7) on the top of the central wing (1) and located at the height of the lateral wings (2, 2').

**9.** The aircraft (100) according to any one of the preceding claims, which includes an emergency parachute (13) inside the central wing (1).

Fig. 1

Fig. 2

Fig. 3

100

9

9

8

3'

12

7

8

Ω

3

2

2'  1

22

Fig. 4

Fig. 5

Fig. 6

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6264136 B1
- US 5984231 A
- US 2019359330 A
- FR 2902079
- FR 2970699